# EUROPÄISCHE PATENTSCHRIFT

(11) **EP 1 477 713 B1**
(45) Veröffentlichungstag und Bekanntmachung des Hinweises auf die Patenterteilung: **30.07.2008**
(21) Anmeldenummer: 04011274.0
(22) Anmeldetag: 12.05.2004
(51) Int. Cl.: F16K 7/12, F16K 7/16

(54) **Druckstück für ein Membranventil**
Pressure element for a diaphragm valve
Moyen de pression pour une soupape à membrane

(30) Priorität: 13.05.2003 DE 20307457 U
(43) Veröffentlichungstag der Anmeldung: 17.11.2004
(73) Patentinhaber: GEMÜ Gebrüder Müller Apparatebau GmbH & Co. KG, 74653 Ingelfingen (DE)
(72) Erfinder: Müller, Fritz, 74653 Ingelfingen (DE)
(74) Vertreter: Dreiss, Fuhlendorf, Steimle & Becker

(56) Entgegenhaltungen:
- CH-A- 304 128
- DE-A- 2 206 561
- DE-A- 3 123 028
- DE-A- 10 062 791
- DE-C- 3 546 117
- GB-A- 1 579 160
- US-A- 6 007 045
- PATENT ABSTRACTS OF JAPAN Bd. 1995, Nr. 06, 31. Juli 1995 (1995-07-31) & JP 07 071628 A (HITACHI METALS LTD), 17. März 1995 (1995-03-17)

## Beschreibung

Die Erfindung befaßt sich mit einem Druckstück zur Beaufschlagung einer aus polymerem Werkstoff bestehenden Membrane eines Membranventils zum Öffnen und Schließen unter Andrückanlage der Membrane gegen einen Steg eines Ventilkörpers. Üblicherweise besteht ein solches Druckstück aus Metall und wird mittels eines Stellantriebs derart bewegt, daß zum Schließen eines Membranventils die Membrane unter Andrückanlage mittels des Druckstücks gegen einen Steg eines Ventilskörpers eines Membranventils gebracht wird. In der Offenstellung des Membranventils ist die Membrane von dem Steg des Ventilkörpers abgehoben, und hierzu bewegt sich das Druckstück in Richtung von dem Steg des Ventilkörpers weg. Bei diesen Membranventilen, gemäß DE 3546117, kommt das Druckstück in Anlageberührung mit der Membrane, und diese wird dann im Zusammenwirken mit dem Druckstück verformt und beim Öffnen wird das Druckstück ebenfalls unter Ausführung einer teilweisen Abrollbewegung von der Membrane abgerückt.

Bei der Membrane aus polymerem Werkstoff handelt es sich um ein empfindliches Bauteil eines Membranventils, welches bei örtlichen Überdehnungen durch die Beaufschlagung durch das Druckstück und durch Reibungskräfte zwischen dem Druckstück und der Membrane einem verstärkten Verschleiß ausgesetzt ist. Durch die Reibung zwischen dem Druckstück und der Membrane wird auch die Beaufschlagungskraft vermindert, so daß mit einer größeren Beaufschlagungskraft gearbeitet werden muß. Durch Abrieb der Membrane und durch örtliche Überdehnungen derselben wird deren Standzeit beeinträchtigt.

Die Erfindung zielt darauf ab, ein Druckstück zur Beaufschlagung einer aus polymerem Werkstoff bestehenden Membrane eines Membranventils bereitzustellen, welches eine Verlängerung der Standzeit der Membrane gestattet sowie eine die Reibung zwischen Druckstück und Membrane minderndes Zusammenwirken hat.

Nach der Erfindung wird hierzu ein Druckstück zur Beaufschlagung einer aus polymerem Werkstoff bestehenden Membrane eines Membranventils zum Öffnen und Schließen unter Andrückanlage der Membrane gegen einen Steg eines Ventilkörpers bereitgestellt, welches sich dadurch auszeichnet, daß auf der der Membrane zugewandten Oberfläche eines Druckstückgrundkörpers wenigstens teilweise eine Materiallage mit sehr niedrigem Reibungskoeffizienten vorgesehen ist.

Die Materiallage mit sehr niedrigem Reibungskoeffizienten besteht aus Polytetrafluorethylen (Teflon). Natürlich kommen auch andere Materialien mit sehr niedrigem Reibungskoeffizienten in Betracht, jedoch hat sich Polytetrafluorethylen als äußerst vorteilhaft in diesem Zusammenhang erwiesen.

Gemäß der Erfindung kann das Druckstück mit der Materiallage mit sehr niedrigem Reibungskoeffizienten vorzugsweise aus PFA umspritzt sein. Auch das Umspritzen des Druckstücks läßt sich auf herstellungstechnisch relativ einfache Weise verwirklichen. Hierdurch erhält man eine wirtschaftliche Herstellungsweise.

Durch die Materiallage mit sehr niedrigem Reibungskoeffizienten wird die Reibung zwischen dem Druckstück und der Membrane herabgesetzt, so daß sich der Abrieb an der Membrane bei der Betätigung des Membranventils reduzieren läßt. Aufgrund dieser Materiallage mit sehr niedrigem Reibungskoeffizienten werden aber auch die auf dem Druckstück aufgebrachten Beaufschlagungskräfte effektiver zur Andrückanlage der Membrane gegen den Steg des Ventilkörpers genutzt. Somit erhält man eine verbesserte Verpressung von Membrane und Steg des Ventilkörpers. Ferner setzt die Materiallage mit sehr niedrigem Reibungskoeffizienten auch das Risiko einer örtlichen Überdehnung des Elastomers der Membrane herab, so daß man insgesamt gesehen durch verminderten Abrieb an der Membrane sowie effektiver Umsetzung der Beaufschlagungskräfte und durch Vermeidung von örtlichen Überdehnungen der Membrane eine wesentlich verlängerte Standzeit erhält.

Weitere vorteilhafte Ausgestaltungen der Erfindung sind in den Ansprüchen 2 bis 6 wiedergegeben.

Ferner kann die Auslegung nach der Erfindung derart getroffen sein, daß die Materiallage mit sehr niedrigem Reibungskoeffizienten nur einen Teil, nämlich jenen Teil des Druckstücks bildet, welcher dem Steg des Ventilkörpers zugeordnet ist, und an dem die höchste Verpressung der Membrane in der Schließstellung des Membranventils auftritt. Somit kann erfindungsgemäß gezielt und örtlich begrenzt auf die stark beanspruchten Bereichen des Druckstücks die Materiallage mit sehr niedrigem Reibungskoeffizienten vorgesehen sein. Insbesondere kann die Materiallage mit sehr niedrigem Reibungskoeffizienten in dem Druckstückgrundkörper eingelegt werden, so daß der Druckstückgrundkörper als Träger für die Materiallage mit sehr niedrigem Reibungskoeffizienten dient.

Gemäß einer alternativen Ausführungsform kann die der Membrane zugewandte Oberfläche des Druckstückgrundkörpers mit der Materiallage mit sehr niedrigem Reibungskoeffizienten wenigstens teilweise, und vorzugsweise vollständig beschichtet sein. Durch Beschichtung läßt sich auf kostengünstige und herstellungstechnisch einfache Weise der der Membrane zugewandten Oberfläche des Druckstückgrundkörpers Eigenschaften mit einem sehr niedrigen Reibungskoeffizienten verleihen, wodurch sich der Abrieb an der Membrane vollumfänglich reduzieren läßt.

Alternativ kann die Materiallage mit sehr niedrigem Reibungskoeffizienten als Formkörper zur Bildung der die Membrane beaufschlagenden Oberfläche ausgebildet und an dem Druckstückgrundkörper fest angebracht sein. Bei dieser Auslegungsform erhält man ein zusammengesetztes Druckstück, dessen Grundkörper beispielsweise aus Metall besteht und als Träger für die entsprechend als Formkörper gestaltete Materiallage mit sehr niedrigem Reibungskoeffizienten dient, wobei der Formkörper insgesamt wenigstens jene Fläche bildet, welche mit der Membrane des Membranventils zusammenarbeitet.

Selbstverständlich sind weitere Ausgestaltungen nach der Erfindung möglich, vorausgesetzt, daß wenigstens jene Bereiche des Druckstückgrundkörpers, welche in unmittelbarer Kontaktberührung mit der Membrane kommen und mit dieser beim Öffnen und Schließen des Membranventils zusammenarbeiten, einen sehr niedrigen Reibungskoeffizienten haben. Durch diese Auslegung läßt sich auf vorteilhafte Weise die Lebensdauer eines solchen Membranventils verlängern, und es wird eine reibungsmindernde Beaufschlagung der Membrane durch das Druckstück verwirklicht.

Nachstehend werden bevorzugte Ausführungsformen nach der Erfindung unter Bezugnahme auf die beigefügte Zeichnung näher erläutert. Darin zeigt:
- Fig. 1: eine schematische Schnittansicht von Druckstück und Membrane des Membranventils,
- Fig. 2: eine schematische Querschnittansicht eines Druckstücks mit einer Oberflächenbeschichtung, gebildet durch Umspritzen mit PFA,
- Fig. 3: eine schematische Schnittansicht eines Druckstücks mit einem daran befestigten Formkörper als Materiallage mit sehr niedrigem Reibungskoeffizienten, und
- Fig. 4: eine schematische Seitenansicht und eine Draufsicht auf ein Druckstück mit einem Einsatz aus einer Materiallage mit sehr niedrigem Reibungskoeffizienten.

In den Figuren der Zeichnung sind gleiche oder ähnliche Teile mit denselben Bezugszeichen versehen.

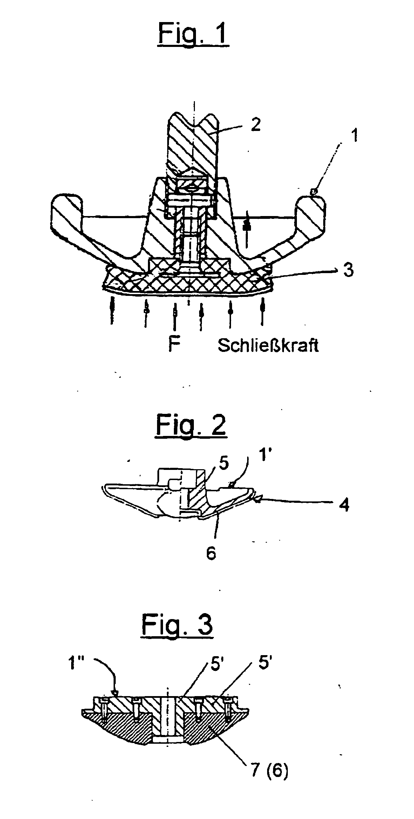

Wie aus Figur 1 zu ersehen ist, ist ein beispielsweise aus Metall hergestelltes und insgesamt mit 1 bezeichnetes Druckstück mit einer nur schematisch angedeuteten Stelleinrichtung 2 auf geeignete Weise derart verbunden, daß das Druckstück 1 eine Membrane 3, welche beispielsweise aus polymerem Werkstoff hergestellt sein kann, derart beaufschlagt, daß die Membrane gegen einen nicht dargestellten Steg eines Ventilkörpers in Schließrichtung angedrückt wird, und hierdurch die Membrane 3 komprimiert wird. In Öffnungsrichtung hingegen bewegt sich das Druckstück 1 von dem Steg des Ventilkörpers weg und ermöglicht eine Entlastung der Membrane sowie ein Abheben derselben von dem Steg des Ventilkörpers in der Offenstellung des Membranventils. Wie aus Figur 1 ebenfalls zu ersehen ist, arbeitet wenigstens ein Teil der Oberfläche des Druckstücks 1 mit der Membrane 3 zusammen.

In den Figuren 2 bis 4 sind bevorzugte Ausführungsform eines als Einzelteil dargestellten Druckstücks 1', 1", 1"' gezeigt.

Das Druckstück 1' nach Figur 2 ist an seiner der Membrane 3 zugewandten Oberfläche mit einer Gleitbeschichtung 4 versehen, die vorzugsweise durch Umspritzen des Druckstückgrundkörpers 5 mittels PFA gebildet wird. Hierdurch erhält die Oberfläche des Druckstückgrundkörpers 5 eine Materiallage 6 mit sehr niedrigem Reibungskoeffizienten.

Bei der Ausgestaltung des Druckstücks 1" nach Figur 3 ist ein Druckstückgrundkörpers 5' vorgesehen, welcher als Träger für einen Formkörper 7 aus der Materiallage 6 mit sehr niedrigem Reibungskoeffizienten dient. Der Formkörper 7 aus der Materiallage 6 mit sehr niedrigem Reibungskoeffizienten bildet hierbei die Oberfläche des Druckstücks 1 ", welche mit der in Figur 1 gezeigten Membrane 3 zur bestimmungsgemäßen Funktion zusammenarbeitet. Der Formkörper 7 ist entsprechend der Darstellung nach Figur 3 mit Hilfe von Senkschrauben an dem Druckstückgrundkörper 5' fest angebracht. Bei dieser in Figur 3 gezeigten Lösung ist somit das Druckstück 1" aus einer Druckstückgrundkörper 5' und einem an diesem befestigten Formkörper 7 aus einer Materiallage mit sehr niedrigem Reibungskoeffizienten zusammengesetzt.

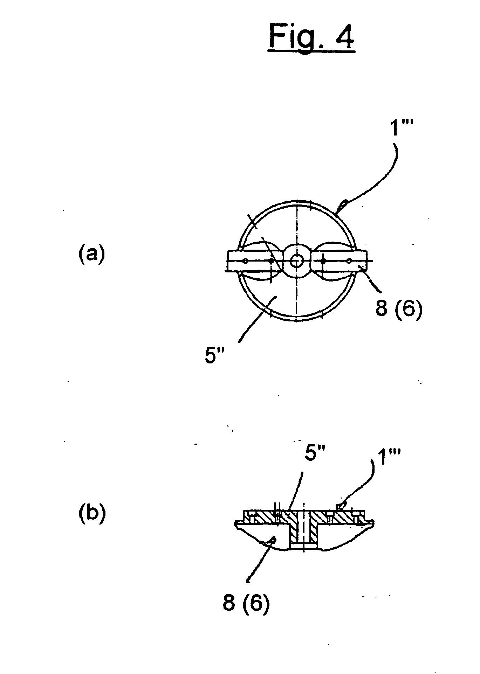

An Hand von Figur 4 wird eine weitere Ausgestaltungsform des insgesamt mit 1"' bezeichneten Druckstücks nach der Erfindung gezeigt. Wie insbesondere aus der Draufsicht in Figur 4 zu ersehen ist, ist in dem Druckstückgrundkörper 5" ein Einsatz aus einer Materiallage 6 mit sehr niedrigem Reibungskoeffizienten vorgesehen, welcher in den Druckstückgrundkörper 5" eingelegt und an diesem befestigt ist. Dieser mit 8 bezeichnete Einsatz aus der Materiallage mit sehr niedrigem Reibungskoeffizienten ist insbesondere jenem Bereich der Oberfläche des Druckstücks 1" zugeordnet, welcher die nicht näher dargestellte Membrane 3 gegen den zugeordneten Steg eines Ventilkörpers in der Schließstellung andrückt. Dieser Oberflächenbereich des Druckstücks 1"' ist jener kritische Bereich, welcher bei einem derartigen Membranventil den stärksten Beanspruchungen ausgesetzt ist.

Bei den erfindungsgemäßen Drucksstücken 1, 1', 1", 1 "' wird somit wenigstens ein Teil der Oberfläche des Druckstückgrundkörpers 5, 5', 5" von einer Materiallage 6 mit sehr niedrigem Reibungskoeffizienten gebildet, so daß sich bei der Betätigung des Membranventils der Abrieb an der Membrane 3 hierdurch reduzieren läßt. Bei der Andrückanlage der Membrane 3 gegen den Steg des Ventilkörpers können die aufgebrachten Beaufschlagungskräfte dank der Materiallage 6 mit sehr niedrigem Reibungskoeffizienten auf effektive Weise zur Verpressung der Membrane genutzt werden. Dank der Materiallage 6 mit sehr niedrigem Reibungskoeffizienten läßt sich die Reibung bei der Relativbewegung der Membrane 3 und Druckstück 1',1", 1"' bei der Betätigung des Membranventils zum Öffnen und Schließen reduzieren, so daß sich örtliche Überdehnungen des Elastomermaterials der Membrane verhindern lassen. Hierdurch läßt sich die Lebensdauer der Membrane 3 verlängern, und man erhält ein langzeitig zuverlässig arbeitendes Membranventil durch die nach der Erfindung vorgesehenen Maßnahmen zur Reduzierung des Reibungskoeffizienten wenigstens an einem Teil der Oberfläche eines Druckstückgrundkörpers 5, 5', 5" mittels einer Materiallage 6 mit sehr niedrigem Reibungskoeffizienten.

Selbstverständlich sind noch zahlreiche weitere Abänderungen und Modifikationen möglich, die der Fachmann im Bedarfsfall treffen wird, ohne den Erfindungsgedanken zu verlassen.

## Patentansprüche

1. Druckstück zur Beaufschlagung einer aus polymerem Werkstoff bestehenden Membrane (3) eines Membranventils zum Öffnen und Schließen unter Andrückanlage der Membrane (3) gegen einen Steg eines Ventilkörpers, bei dem auf der der Membrane (3) zugewandten Oberfläche eines Druckstückgrundkörpers (5, 5', 5") wenigstens teilweise eine Materiallage (6) mit sehr niedrigem Reibungskoeffizienten aus Polytetrafluorethylen oder PFA vorgesehen ist.

2. Druckstück nach Anspruch 1, **dadurch gekennzeichnet, dass** die Materiallage (6) mit sehr niedrigem Reibungskoeffizienten wenigstens an dem dem Steg zugeordneten Bereich des Druckstückgrundkörpers (5") vorgesehen ist.

3. Druckstück nach einem der Ansprüche 1 oder 2, **dadurch gekennzeichnet, dass** die Materiallage (6) mit sehr niedrigem Reibungskoeffizienten in den Druckstückgrundkörper (5") eingelegt ist.

4. Druckstück nach Anspruch 1 oder 2, **dadurch gekennzeichnet, dass** die Materiallage (6) mit sehr niedrigem Reibungskoeffizienten als Formkörper (7) zur Bildung der die Membrane (3) beaufschlagenden Oberfläche ausgebildet und an dem Druckstückgrundkörper (5') fest angebracht ist.

5. Druckstück nach Anspruch 1 bis 3, **dadurch gekennzeichnet, dass** die der Membrane (3) zugewandte Oberfläche des Druckstückgrundkörpers (5) mit der Materiallage (6) mit sehr niedrigem Reibungskoeffizienten wenigstens teilweise, vorzugsweise vollständig, beschichtet ist.

6. Druckstück nach Anspruch 5, **dadurch gekennzeichnet, dass** der Druckstückgrundkörper (5) mit der Materiallage (6) mit sehr niedrigem Reibungskoeffizienten umspritzt ist.

## Claims

1. Thrust piece for application of pressure to a diaphragm (3) of a diaphragm valve, which diaphragm (3) consists of polymeric material, for opening and closing under contact pressure of the diaphragm (3) against a web of a valve body, in which a material layer (6) having a very low coefficient of friction and comprising polytetrafluoroethylene or PFA is provided at least partly on that surface of a thrust piece base body (5, 5', 5'') which faces the diaphragm (3).

2. Thrust piece according to Claim 1, **characterized in that** the material layer (6) having a very low coefficient of friction is provided at least on that region of the thrust piece base body (5'') which is coordinated with the web.

3. Thrust piece according to either of Claims 1 and 2, **characterized in that** the material layer (6) having a very low coefficient of friction is inlaid in the thrust piece base body (5'').

4. Thrust piece according to Claim 1 or 2, **characterized in that** the material layer (6) having a very low coefficient of friction is in the form of a moulding (7) for the formation of the surface which comes into contact with the diaphragm (3) and is firmly mounted on the thrust piece base body (5').

5. Thrust piece according to Claim 1 to 3, **characterized in that** that surface of the thrust piece base body (5) with the material layer (6) having a very low coefficient of friction which faces the diaphragm (3) is at least partly, preferably completely, coated.

6. Thrust piece according to Claim 5, **characterized in that** the thrust piece base body (5) with the material layer (6) having a very low coefficient of friction is extrusion-coated.

## Revendications

1. Pièce recevant la pression pour la mise sous charge d'un diaphragme (3) composé d'une matière polymère d'une soupape à diaphragme pour l'ouverture et la fermeture par application par pression du diaphragme contre une entretoise d'un corps de soupape, dans laquelle, sur la surface, tournée vers le diaphragme (3), d'un corps de base de pièce recevant la pression (5, 5', 5"), une couche de matière (6) à coefficient de friction très bas en polytétrafluoréthylène ou PFA est prévue au moins en partie.

2. Pièce recevant la pression selon la revendication 1, **caractérisée en ce que** la couche de matière (6) à coefficient de friction très bas est prévue au moins dans la zone, associée à l'entretoise, du corps de base de pièce recevant la pression (5").

3. Pièce recevant la pression selon l'une quelconque des revendications 1 ou 2, **caractérisée en ce que** la couche de matière (6) à coefficient de friction très bas est insérée dans le corps de base de pièce recevant la pression (5").

4. Pièce recevant la pression selon la revendication 1 ou 2, **caractérisée en ce que** la couche de matière (6) à coefficient de friction très bas est réalisée comme un corps moulé (7) pour former la surface mettant sous charge le diaphragme (3) et est rapportée solidement au corps de base de pièce recevant la pression (5').

5. Pièce recevant la pression selon la revendication 1 à 3, **caractérisée en ce que** la surface, tournée vers le diaphragme (3), du corps de base de pièce recevant la pression (5) est recouverte de la couche de matière (6) à coefficient de friction très bas, au moins en partie, de préférence complètement.

6. Pièce recevant la pression selon la revendication 5, **caractérisée en ce que** le corps de base de pièce recevant la pression (5) est surmoulé avec la couche de matière (6) à coefficient de friction très bas.
